# EUROPÄISCHE PATENTANMELDUNG

(11) **EP 0 949 424 A2**
(43) Veröffentlichungstag der Anmeldung: **13.10.1999**
(21) Anmeldenummer: 99104524.6
(22) Anmeldetag: 06.03.1999
(51) Int. Cl.: F16B 12/20

(54) **Verbinder zwischen zwei Bauteilen, insbesondere Platten**

(30) Priorität: 11.03.1998 DE 29804267 U
(71) Anmelder: HÄFELE GmbH & Co., 72202 Nagold (DE)
(72) Erfinder: Häsler, Georg, 72202 Nagold (DE); Kuppler, Karl, 72229 Rohrdorf (DE); Oettl, Reinhold, 71154 Nufringen (DE)
(74) Vertreter: KOHLER SCHMID + PARTNER

(57) **Zusammenfassung**

Um einen Verbinder 3 zwischen zwei Bauteilen 1 und 2 mit einer im ersten Bauteil gelagerten Spannvorrichtung und mit einem im zweiten Bauteil 2 festlegbaren mittels der Spannvorrichtung gegenüber dieser längs verschiebbaren Bolzen 6 zu schaffen, welcher einerseits unabhängig von der Bauteilstärke immer gleiche Abmessungen aufweist und andererseits in den Außenabmessungen gering gehalten werden kann, weist der Bolzen 6 an seinem mit der Spannvorrichtung zusammenwirkenden Ende 11 eine Ausnehmung 13 auf, in welche ein Spannglied 14 der Spannvorrichtung eingreift.

## Beschreibung

Die Erfindung bezieht sich auf einen Verbinder zwischen zwei Bauteilen, insbesondere zwei Platten. Vor allem in der Möbelindustrie werden heute in zunehmendem Maße zum Verbinden von Holzplatten, welche senkrecht aneinander stoßen, Beschläge verwendet, welche ein schnelles und problemloses Verbinden der Platten gestatten und außerdem ein Losen derselben im Bedarfsfalle ermöglichen. Bei den bekannten Beschlägen ist in der einen Platte senkrecht zur Plattenoberfläche ein Einbautopf eingelassen, in welchem ein Verriegelungselement drehbar gelagert ist. Im anderen Plattenteil ist in einer meist parallel zur Plattenoberfläche vorgesehenen Bohrung ein Bolzen befestigt, welcher mit seinem Kopf in das Verriegelungselement eingreift. Beim Verdrehen des Verriegelungselementes wird der Kopf des Bolzens von einer Kurvenfläche hintergriffen, wodurch der Bolzen und damit die mit ihm verbundene Platte gegen die andere Platte mit dem Einbautopf angepreßt und verriegelt wird. Der Einbautopf mit dem darin drehbar gelagerten Verriegelungselement weist einen relativ großen Durchmesser auf, so daß durch die damit notwendige große Bohrung die Platte unnötig geschwächt wird. Dies gilt insbesondere dann, wenn der Einbautopf in unmittelbarer Nähe der Kante der Möbelplatte vorgesehen werden muß. Wenn die Bohrung für den Bolzen parallel zur Plattenoberfläche verlaufen muß, ist es erforderlich, die Längsbohrung, um ein Ausbrechen des Holzes zu vermeiden, möglichst in der Mittelebene anzuordnen. Dann ist es aber notwendig, je nach der Plattenstärke unterschiedliche Einbautöpfe zu verwenden.

Die Aufgabe der Erfindung ist es nunmehr, einen Verbinder mit einer im ersten Bauteil gelagerten Spannvorrichtung und einem im zweiten Bauteil festlegbaren mittels der Spannvorrichtung gegenüber dieser längsverschiebbaren Bolzen zu schaffen, welcher einerseits unabhängig von der Plattenstärke immer gleiche Abmessungen aufweisen und andererseits in den Außenabmessungen gering gehalten werden kann, um Schwächungen der zu verbindenden Bauteile durch zu große Bohrungen zu vermeiden sowie den Verbinder und die Bohrungen möglichst wenig sichtbar zu machen.

Dies wird erfindungsgemäß bei einem derartigen Verbinder da-durch erreicht, daß der Bolzen an seinem mit der Spannvorrichtung zusammenwirkenden Ende eine Ausnehmung aufweist, in welche ein Spannglied der Spannvorrichtung eingreift. Damit entfällt also der Einbautopf mit dem drehbaren Verriegelungselement. Vielmehr kann nunmehr ein in den Ausmaßen relativ kleines Spannglied unmittelbar in den Bolzen eingreifen und diesen anziehen. In beiden Bauteilen sind nunmehr nur noch Bohrungen erforderlich, welche den Abmessungen des Bolzen und des verwendeten Spanngliedes entsprechen. Außerdem können die Bohrungen jeweils in der Mitte der Bauteile vorgesehen werden, ohne daß hierdurch andere Abmessungen des Bolzens oder des Spanngliedes erforderlich sind.

Vorzugsweise wird als Spannglied ein in die Ausnehmung des Bolzens eingreifender, im ersten Bauteil drehbar gelagerter Exzenter verwendet. Ein solcher Exzenter kann sehr kleine Abmessungen aufweisen, so daß die für den Eingriff eines Werkzeuges erforderliche Bohrung nur einen geringen Durchmesser aufweisen muß. Die Ausnehmung im Bolzen weist vorzugsweise ein Einführungsteil und eine Gleitfläche für den Exzenter auf. Das Einführungsteil dient lediglich zum ersten Einsetzen des Exzenters und anschließend wirkt der Exzenter nur noch mit der Gleitfläche des Bolzens zum Anziehen desselben zusammen. Da die Gleitfläche in der Ausnehmung des Bolzens stark beansprucht ist, weist diese zweckmäßigerweise eine Verstärkung auf. Um ein unkontrolliertes Weiterdrehen des Exenters zu verhindern, ist in der Ausnehmung im Bolzen ein Endanschlag für den Exzenter vorgesehen. Zur Erleichterung der Lösung der Bauteile voneinander weist die Ausnehmung im Bolzen zusätzlich auch noch eine Abdrückfläche für den Exzenter auf. Wenn dieser dann in der entgegengesetzten Richtung gedreht wird, verschiebt sich der Bolzen nach außen, so daß dann die Teile voneinander gelöst werden können. Zweckmäßigerweise ist der Bolzen an seinem mit dem Spannglied zusammenwirkenden Ende mit einer Führungsplatte versehen, so daß er leichter eingesetzt werden kann und sich auch beim Anziehen keine Verkantung ergibt.

Der Exzenter kann sich beim Anziehen des Bolzens in der zum Einsetzen eines Werkzeuges zum Drehen des Exzenters erforderlichen Bohrung im ersten Bauteil abstützen. Eine günstigere Lösung ergibt sich jedoch, wenn die Spannvorrichtung, also sowohl der Bolzen mit seiner Ausnehmung als auch der Exzenter in einer besonderen Spannhülse angeordnet sind. Dabei weist dann die Spannhülse eine Querbohrung zu ihrer Längsachse auf, in welcher der Exzenter drehbar gelagert ist. Um beim Einsetzen der Spannhülse ein Verschieben derselben, beispielsweise beim Transport der noch nicht zusammengefügten Bauteile zu verhindern, ist an der Spannhülse eine etwa axial auf den Exzenter wirkende in deren Querbohrung eingreifende Feder vorgesehen, so daß sich nach dem Einsetzen der Spannhülse der Exzenter innerhalb der Querbohrung axial verschiebt und über den Umfang der Hülse in die Bohrung für das Werkzeug hineinragt. Eine selbsttätige Verschiebung oder Verdrehung der Spannhülse ist damit ausgeschlossen. Man kann sie jedoch ohne weiteres wieder entnehmen, in dem man mit einem Werkzeug den Exzenter nach unten drückt und gleichzeitig die Spannhülse herauszieht.

Wie bereits oben dargelegt, kann sich der Exzenter zum Anziehen des Bolzens in der Bohrung für das Werkzeug abstützen. Es ergeben sich jedoch günstigere Verhältnisse, wenn sich an die Spannvorrichtung eine Klemmhülse zur Festlegung der Spannhülse anschließt, wobei die Klemmhülse und der Bolzen entsprechend konisch ausgebildet sind. In diesem Fall wird beim Drehen des Exzenters und Anziehen des Bolzens zunächst die Klemmhülse aufgeweitet, so daß sie sich innerhalb der Bohrung verkeilt und damit die Spannhülse festlegt.

Das freie Ende des Bolzens kann am zweiten Bauteil an sich in beliebiger Weise festgelegt sein. Vorzugsweise ist es jedoch als Spreizbolzen mit Spreizhülse ausgebildet, wobei beide Teile entsprechend konisch gestaltet und in einer Bohrung des Bauteils angeordnet sind. Zweckmäßigerweise sind die Konusse des Bolzens, der Klemmhülse und der Spreizhülse so aufeinander abgestimmt, daß beim Anziehen des Bolzens die Klemmhülse zuerst aufgeweitet wird. Dadurch ist sichergestellt, daß die Spannhülse zunächst in ihrer Lage gesichert wird, bevor das andere Bauteil angezogen wird.

Vorzugsweise sind die Klemm- und die Spreizhülse zumindest teilweise mit rippenartigen Ansätzen versehen, um einen besseren Halt in der Bohrung zu gewährleisten. Um sicher zu stellen, daß beim Einsetzen des Verbinders die Querbohrung der Spannhülse mit der Bohrung für das Werkzeug fluchtet, ist die Klemmhülse mit einem ringförmigen Anschlag versehen. Die Verstärkungen an der Gleitfläche für den Exzenter können zusätzlich noch zur Führung des Bolzens in der Spannhülse ausgenutzt werden, in dem sie den Bolzen seitlich überragen und in Ausnehmungen der Spannhülse geführt werden.

Bei parallel zur Bauteiloberfläche verlaufenden Bohrungen soll eine Spreizung der Hülsen senkrecht zur Bauteiloberfläche möglichst vermieden werden, um bei dünnem Material ein Ausbrechen desselben zu verhindern. Zu diesem Zweck ist der Bolzen abgeflacht und verläuft seine flache Ebene etwa parallel zur Bauteiloberfläche, wobei die Klemm- und die Spannhülse zur Spreizung etwa senkrecht zur Bauteiloberfläche verlaufende Schlitze aufweisen.

Die Herstellung der Hülsen gestaltet sich besonders einfach, wenn sie aus zwei durch ein Filmband verbundenen Halbschalen bestehen. Um die Halbschalen der Hülse beim Einsetzen zusammenzuhalten, sind sie an ihrer dem Filmband gegenüberliegenden Seite mit einer Rastvorrichtung versehen. Selbstverständlich können auch sämtliche Hülsen, nämlich die Spannhülse, die Klemmhülse und die Spreizhülse bzw. ihre Halbschalen aus einem Stück bestehen.

Wenn man die Verbindung zwischen den zwei Bauteilen lösen will, muß hierzu die Spannvorrichtung gelöst werden. Bei der folgenden Trennung der beiden Bauteile besteht die Gefahr, daß die Spannvorrichtung aus dem ersten Bauteil mit herausgezogen wird. Um dies zu verhindern, sind nach einem weiteren Merkmal der Erfindung in der Spannhülse ein oder mehrere Keile in seiner Form angepaßten Ausnehmungen mit Spiel längs verschiebbar gelagert und greifen in einen Zwischenraum derselben, in Anzugsrichtung gesehen vor dem Keil, ein oder mehrere Mitnehmer des Bolzens ein. Beim Spannen der Vorrichtung wird nunmehr der Keil durch den Mitnehmer in Anzugsrichtung verschoben und verkeilt sich in der Ausnehmung. Dadurch wird die Spannhülse zusätzlich im ersten Bauteil verklemmt.

Wenn nunmehr die Verbindung gelöst wird, bleibt die Verklemmung der Keile in ihren Ausnehmungen erhalten, so daß die Spannhülse nach wie vor in ihrem Bauteil festgehalten wird. Bei einem Fehlen der Keile wäre dagegen keine Anlage der Spannhülse in der Bohrung des ersten Bauteils gewährleistet und würde die Spannhülse beim Trennen der Bauteile dadurch mit herausgezogen. Um ein sicheres Festhalten der Keile in den Ausnehmungen zu gewährleisten, sind diese vorzugsweise ebenso wie die Seitenwände der Ausnehmungen verzahnt und insbesondere mit Widerhaken versehen.

Die Zeichnung zeigt ein Ausführungsbeispiel der Erfindung. Es stellen dar:

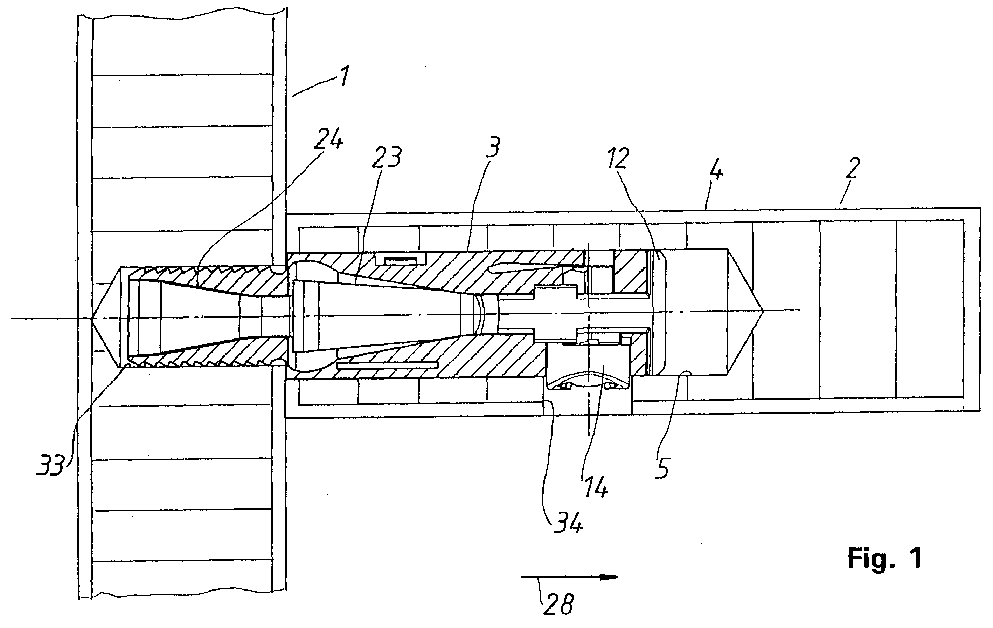

- Fig. 1: einen Querschnitt durch eine Verbindung zwischen zwei Holzplatten,

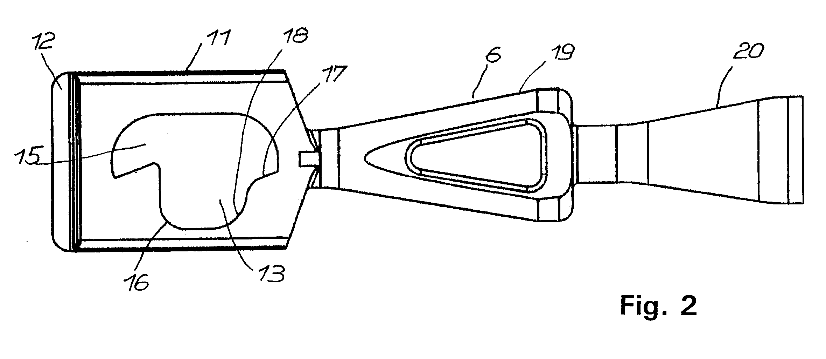

- Fig. 2: eine Draufsicht auf einen Bolzen,

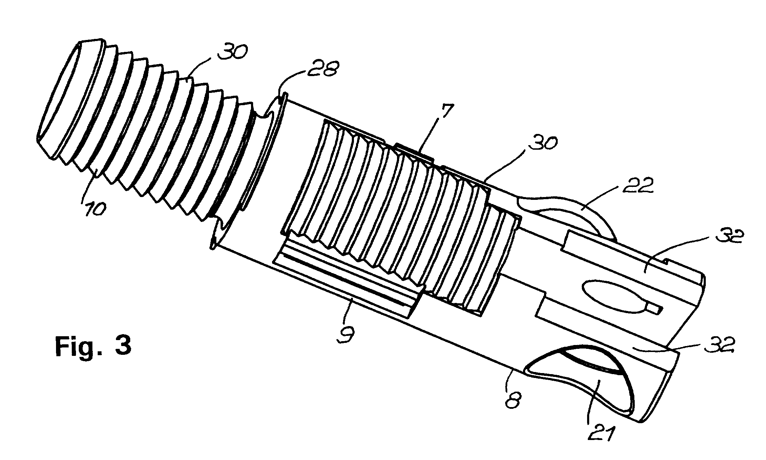

- Fig 3: eine Ansicht einer Einheit aus Spannhülse, Klemmhülse und Spreizhülse,
- Fig. 4: eine Darstellung gemäß Figur 3 in aufgeklapptem Zustand von zwei durch ein Filmband verbundene Hülsenhalbschalen,

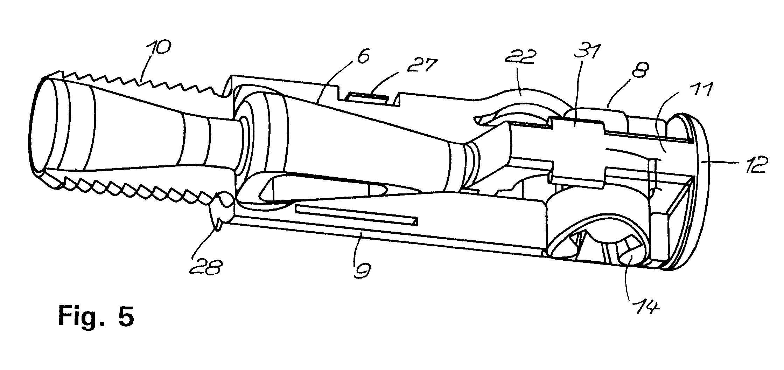

- Fig. 5: eine perspektivische Darstellung des in einer Halbschale liegenden Bolzens,
- Fig. 6: einen in einer Halbschale angeordneten Bolzen mit geschnittenem Exzenter in einer Mittelstellung desselben beim Anzug,
- Fig. 7: einen Ausschnitt aus Figur 6 mit Exzenter in der Einführungslage,
- Fig. 8: einen Ausschnitt aus Figur 6 mit Exzenter in der angespannten Endlage,
- Fig. 9: einen Ausschnitt aus Figur 6 mit Exzenter in einer Mittellage des Exzenters beim Lösen der Spannvorrichtung,
- Fig. 10: eine Draufsicht auf eine aufgeklappte Spannhülse mit in der einen Hälfte eingelegten Bolzen einer anderen Ausführungsform,
- Fig. 11: eine Darstellung nach Figur 10 in perspektivischer Darstellung ohne Bolzen.

Die beiden aus Holz bestehenden Möbelplatten 1 und 2 sind mittels eines Verbinders 3 aneinander befestigt. Parallel zur Oberfläche 4 der Platte 2 ist in ihrer Mittelebene eine Längsbohrung 5 angeordnet, während die Platte 1 eine Querbohrung 33 aufweist.

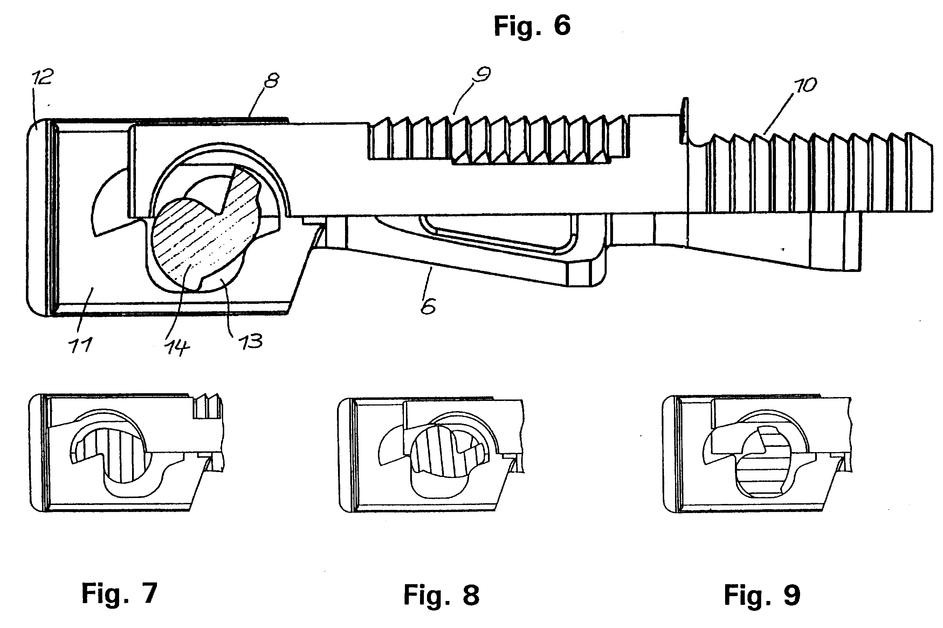

Der Verbinder 3 besteht aus einem Bolzen 6, welcher in einer Hülse 7 längsverschiebbar gelagert ist. Die Hülse 7 setzt sich zusammen aus der Spannhülse 8, der Klemmhülse 9 und der Spreizhülse 10. Der Bolzen 6 ist in seinem vorderen Teil 11 abgeflacht und weist an seinem vorderen Ende zur Führung in der Bohrung 3 eine Führungsplatte 12 auf. Im abgeflachten Teil 11 ist eine Ausnehmung 13 vorgesehen, in welche ein Exzenter 14 eingreift, dessen Querschnittsform vor allem aus Figur 6 hervorgeht. Die Ausnehmung 13 weist für den Exzenter 14 zunächst ein Einführungsteil 15 auf, an welches sich eine Gleitfläche 16 und ein Anschlag 17 anschließen. Außerdem ist zum Lösen der Verbindung in der Ausnehmung noch eine Abdrückfläche 18 für den Exzenter 14 vorgesehen. An den abgeflachten Teil 11 des Bolzens 6 mit der Ausnehmung 13 schließen sich dann die Konusse 19 und 20 an.

Der abgeflachte Teil 11 des Bolzens 6 befindet sich in der Spannhülse 8, welche mit einer Querbohrung 21 als Lagerung für den Exzenter 14 versehen ist. Dabei wirkt auf den Exzenter 14 eine Feder 22 ein. Wenn die Spannhülse 8 in die Bohrung 3 eingesetzt ist, fluchtet die Querbohrung 21 mit einer Einführbohrung 34 für ein nicht dargestelltes Werkzeug zum Betätigen des Exzenters 14. Dabei wird der Exzenter 14 durch die Feder 22 in diese Einführbohrung 34 eingeschoben, um ein ungewolltes Herausfallen der Spannhülse 8 aus der Bohrung 3 oder ein Verdrehen derselben, beispielsweise während eines Transportes, der noch nicht verbundenen Platten 1 und 2, zu verhindern. An die Spannhülse 8 schließt sich die Klemmhülse 9 an, welche einen Innenkonus 23 aufweist, welcher mit dem Konus 19 des Bolzens 6 zusammenwirkt. Hinter der Klemmhülse 9 liegt die Spreizhülse 10, welche in die Bohrung 33 der zweiten Holzplatte 1 hineinragt. In dem konischen Teil 24 der Spreizhülse 10 ist der zweite Konus 20 des Bolzens 6 angeordnet.

Da die Gleitfläche 16 in der Ausnehmung 13 des Bolzens 6 stark belastet ist, sind an dieser Verstärkungen 31 vorgesehen, welche bei eingesetztem Bolzen 6 Ausnehmungen 32 in der Spannhülse 8 übergreifen und zusätzlich die Führung des Bolzens 6 in der Spannhülse 8 verbessern. Um die Reibung der Klemm- 9 und der Spreizhülse 10 in den Bohrungen 3 und 33 zu erhöhen, sind sie mit rippenartigen Ansätzen 30 versehen.

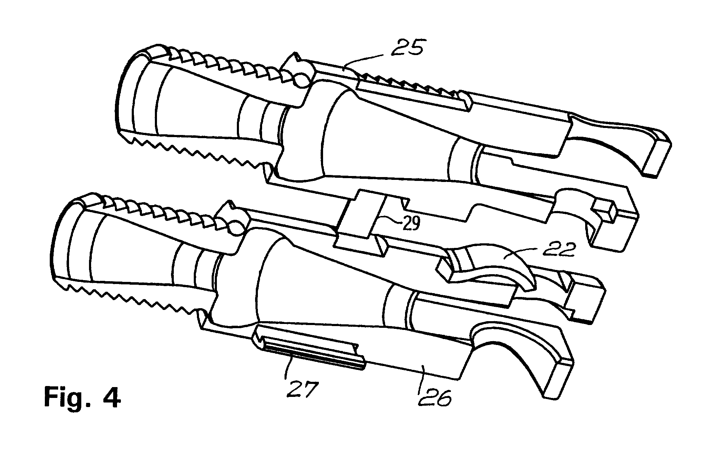

Um die zwei Platten 1 und 2 miteinander zu verbinden, wird zunächst der Bolzen 6 in eine der geöffneten und durch ein Filmband 29 schwenkbar verbundenen Halbschalen 25 oder 26 (Fig.4) der Hülsen 8, 9 u. 10 eingelegt. Anschließend werden dann die beiden Halbschalen 25 und 26 aufeinander geschwenkt und mittels der Rastvorrichtung 27 miteinander verbunden und dann der Exzenter 14 in die Querbohrung 21 der Spannhülse 8 eingesetzt. Nachdem die Bohrungen 3, 33 und 22 in den Platten 1 und 2 vorgenommen wurden, werden die Spannhülse 8 zusammen mit der Klemmhülse 9 mit eingelegtem Bolzen 6 und Exzenter 14 in die Bohrung 3 der Platte 2 eingeschoben, und zwar bis der Anschlag 28 der Klemmhülse 9 außen an der Platte 2 anliegt. Dies ist der Fall, wenn die Querbohrung 21 der Spannhülse 8 mit der Einführbohrung 34 für das Werkzeug fluchtet. Um ein Spreizen der Klemm- 9 und der Spreizhülse 10 parallel zur Plattenoberfläche zu ereichen, sind die Trennschlitze zwischen den Hülsenhalschalen so angeordnet, daß sie senkrecht zur Plattenoberfläche verlaufen. Dadurch wird ein Ausbrechen vorallem bei dünnen Platten verhindert. Die Feder 22 wird beim Einschieben gespannt und drückt den Exzenter 14, sobald er unter die Einführbohrung 34 für das Werkzeug zu liegen kommt nach oben, so daß die Spannhülse 8 innerhalb der Bohrung 3 unverlierbar festgelegt ist. Anschließend wird die Spreizhülse 10 in die vorbereitete Bohrung 6 der zweiten Holzplatte 1 eingeführt. Zur Festlegung der Teile aneinander wird nunmehr der Exzenter 14 mittels eines nicht dargestellten Werkzeuges im Uhrzeigersinn gedreht (Figuren 6 bis 8) bis der Exzenter gemäß Figur 6 auf den Anschlag 17 aufläuft. Dabei wird der Bolzen 6 in Pfeilrichtung 28 verschoben, wobei zunächst der Konus 19 des Bolzens 6 die Klemmhülse 9 aufweitet, so daß die Klemmhülse 9 in der Bohrung 3 festgelegt ist und ein Verschieben der Spannhülse 8 ausschließt. Anschließend wirkt dann der Konus 20 des Bolzens 6 mit dem Konus 24 in der Spreizhülse 10 zusammen, weitet diese auf und sichert sie in der Platte 1. Beim weiteren Verschieben des Bolzens 6 werden dann die beiden Platten 1 und 2 bis zum Anschlag aneinander gezogen und gegeneinander festgelegt. Falls die Verbindung gelöst werden soll, wird der Exzenter 14 entgegen den Uhrzeigersinn gedreht, wobei sich der Exzenter auf der Abdrückfläche 18 abwälzt und den Bolzen entgegen der Pfeilrichtung 28 verschiebt.

Dadurch werden die Spannhülse 9 und die Spreizhülse 10 wiederum entspannt, so daß die Platten 1 und 2 voneinander getrennt werden können. Die Spannhülse 8 kann auch völlig aus der Bohrung 3 entfernt werden, jedoch muß hierzu mit einem Werkzeug der Exzenter 14 gegen die Feder 22 gedrückt werden, so daß er aus der Einführbohrung 34 für das Werkzeug austritt.

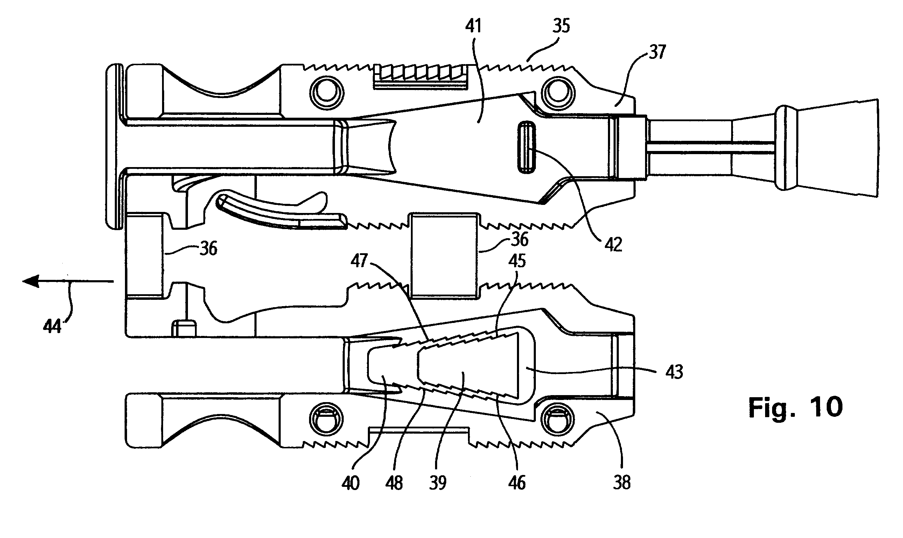

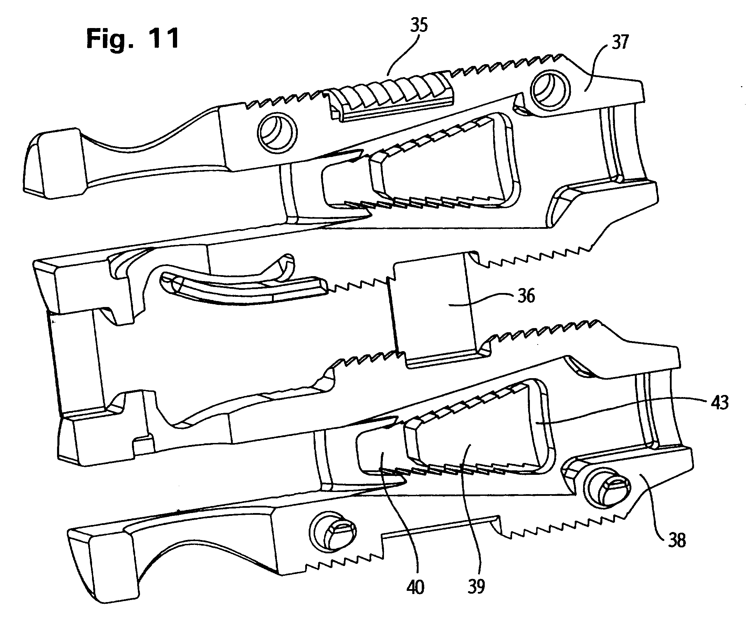

Die Spannhülse 35 nach den Figuren 10 und 11 besteht aus den beiden durch ein Filmband 36 verbundenen Hälften 37 und 38. Dabei weist jede Hälfte einen Keil 39 auf, welcher in einer seiner Form angepaßten Ausnehmung 40 mit Spiel längs verschiebbar gelagert ist. Bei der Fertigung ist dabei der Keil mittels eines aus der Zeichnung nicht ersichtlichen Filmbandes in der Ausnehmung 40 gehalten. Der Bolzen 41 ist zusätzlich auf beiden Seiten mit je einem Mitnehmer 42 versehen, welcher in den Zwischenraum 43 der Ausnehmung 40 eingreift und zwar in Anzugsrichtung 44 gesehen vor dem Keil 39. Der Keil 39 ist an seinen Seitenwänden 45 und 46, ebenso wie die Seitenwände 47 und 48 der Ausnehmung 40 mit Widerhaken versehen.

Wenn der Bolzen 41 in Richtung des Pfeiles 44 angezogen wird, verschiebt der Mitnehmer 42 den Keil 39 in die gleiche Richtung, so daß dieser sich mit seinen Widerhaken im vorderen Teil der Ausnehmung 40 verklemmt. Auf diese Weise wird die Form der Spannhülse 1 auch bei der Verschiebung des Bolzens 41 entgegen der Richtung 44, nämlich beim Entspannen, in ihrer Form erhalten, so daß sie weiterhin in der in diesen Figuren nicht dargestellten Bohrung in der Platte 1 verkeilt ist und bei einer Trennung der Platten 1 und 2 in dieser verbleibt.

## Patentansprüche

1. Verbinder zwischen zwei Bauteilen, insbesondere Platten, mit einer im ersten Bauteil gelagerten Spannvorrichtung und einem im zweiten Bauteil festlegbaren, mittels der Spannvorrichtung gegenüber dieser längsverschiebbaren Bolzen, dadurch gekennzeichnet, daß der Bolzen (6) an seinem mit der Spannvorrichtung zusammenwirkenden Ende (11) eine Ausnehmung (13) aufweist, in welche ein Spannglied (14) der Spannvorrichtung eingreift.

2. Verbinder nach Anspruch 1, dadurch gekennzeichnet, daß als Spannglied ein in die Ausnehmung (13) des Bolzens (6) eingreifender im ersten Bauteil (2) drehbar gelagerter Exzenter (14) ausgebildet ist.

3. Verbinder nach Anspruch 2, dadurch gekennzeichnet, daß die Ausnehmung (13) im Bolzen (6) ein Einführungsteil (15) und eine Gleitfläche (16) für den Exzenter (14) aufweist.

4. Verbinder nach Anspruch 3, dadurch gekennzeichnet, daß der Bolzen (6) an seiner Gleitfläche (16) für den Exzenter (14) Verstärkungen (31) aufweist.

5. Verbinder nach einem oder mehreren der vorhergehenden Ansprüche 2 bis 4, dadurch gekennzeichnet, daß die Ausnehmung (13) im Bolzen (6) einen Endanschlag (17) für den Exzenter (14) aufweist.

6. Verbinder nach einem oder mehreren der vorhergehenden Ansprüche 2 bis 5, dadurch gekennzeichnet, daß die Ausnehmung (13) im Bolzen (6) eine Abdrückfläche (18) für den Exzenter (14) aufweist.

7. Verbinder nach einem oder mehreren der vorhergehenden Ansprüche, dadurch gekennzeichnet, daß der Bolzen (6) an seinem mit dem Spannglied (14) zusammenwirkenden Ende (11) eine Führungsplatte (12) aufweist.

8. Verbinder nach einem oder mehreren der vorhergehenden Ansprüche, dadurch gekennzeichnet, daß die Spannvorrichtung in einer im ersten Bauteil (2) gelagerten Spannhülse (8) angeordnet ist.

9. Verbinder nach Anspruch 8, dadurch gekennzeichnet, daß die Spannhülse (8) eine Querbohrung (21) zu ihrer Längsachse aufweist, in welcher der Exzenter (14) drehbar gelagert ist, welcher von der Bauteiloberfläche durch eine Ausnehmung (34) zugänglich ist.

10. Verbinder nach Anspruch 9, dadurch gekennzeichnet, daß die Spannhülse (8) eine etwa axial auf den Exzenter (14) wirkende in die Querbohrung (21) eingreifende Feder (22) aufweist.

11. Verbinder nach einem oder beiden der vorhergehenden Ansprüche 8 bis 10, dadurch gekennzeichnet, daß sich an die Spannhülse (8) eine Klemmhülse (9) zur Festlegung der Spannhülse (8) anschließt, wobei die Klemmhülse (9) und der Bolzen (6) entsprechend konisch (19, 21) ausgebildet sind.

12. Verbinder nach einem oder mehreren der vorhergehenden Ansprüche, dadurch gekennzeichnet, daß das freie Ende des Bolzens (6) als Spreizbolzen mit Spreizhülse (10) ausgebildet ist und beide Teile entsprechend konisch (20, 24) ausgebildet sind.

13. Verbinder nach den Ansprüchen 11 und 12, dadurch gekennzeichnet, daß die Konusse (19, 20; 21, 24) des Bolzens (6), der Klemmhülse (9) und der Spreizhülse (10) so aufeinander abgestimmt sind, daß beim Anziehen des Bolzens (6) die Klemmhülse (9) zuerst aufgeweitet wird.

14. Verbinder nach einem oder mehreren der vorhergehenden Ansprüche 11 bis 13, dadurch gekennzeichnet, daß die Klemm- (9) und die Spreizhülse (10) zumindest teilweise mit rippenartigen Ansätzen (30) versehen sind.

15. Verbinder nach einem oder mehreren der vorhergehenden Ansprüche 11 bis 14, dadurch gekennzeichnet, daß die Klemmhülse (9) einen insbesondere ringförmigen Anschlag (28) aufweist.

16. Verbinder nach den Ansprüchen 4 und 8, dadurch sprüche, dadurch gekennzeichnet, daß die Verstärkungen (31) an der Gleitfläche (16) für den Exzenter (14) den Bolzen (6) seitlich überragen und in Ausnehmungen (32) der Spannhülse (8) geführt sind.

17. Verbinder nach einem oder mehreren der vorhergehenden Ansprüche 11 bis 16, dadurch gekennzeichnet, daß der Bolzen (6) abgeflacht (11) ist und seine flache Ebene etwa parallel zur Bauteiloberfläche verläuft, wobei die Klemm- (9) und die Spreizhülse (10) zur Spreizung etwa senkrecht zur Bauteiloberfläche verlaufende Schlitze aufweist.

18. Verbinder nach einem oder mehreren der vorhergehenden Ansprüche 8 bis 17, dadurch gekennzeichnet, daß die Hülsen (8, 9, 10) jeweils aus zwei durch ein Filmband (29) verbundenen Halbschalen (25, 26) bestehen.

19. Verbinder nach Anspruch 18, dadurch gekennzeichnet, daß die Halbschalen (25, 26) an ihren dem Filmband (29) gegenüberliegenden Seite mit einer Rastvorrichtung (27) versehen sind.

20. Verbinder nach einem oder mehreren der vorhergehenden Ansprüche 8 bis 18, dadurch gekennzeichnet, daß die Spannhülse (8), die Klemmhülse (9) und die Spreizhülse (10) bzw. ihre Halbschalen (25, 26) aus einem Stück bestehen.

21. Verbinder nach einem oder mehreren der vorhergehenden Ansprüche 8 bis 20, dadurch gekennzeichnet, daß in der Spannhülse (41) ein oder mehrere Keile (39) in seiner Form angepaßten Ausnehmungen (40) mit Spiel längs verschiebbar gelagert sind und in einen Zwischenraum (43), in Anzugsrichtung (44) gesehen vor dem Keil (39), ein oder mehrere Mitnehmer (42) des Bolzens (41) eingreifen.

22. Verbinder nach Anspruch 21, dadurch gekennzeichnet, daß die Keile (39) an ihren Längsseiten (45,46) und die entsprechenden Seitenwände (47,48) der Ausnehmungen (40) verzahnt, insbesondere mit Widerhaken versehen sind.
